# EUROPÄISCHE PATENTANMELDUNG

(11) **EP 2 253 459 A2**
(43) Veröffentlichungstag der Anmeldung: **24.11.2010**
(21) Anmeldenummer: 10157400.2
(22) Anmeldetag: 23.03.2010
(51) Int. Cl.: B29C 70/08, B29C 43/00, B29C 43/20, B29C 43/52, B29C 35/12, B32B 27/00

(54) **Verfahren zum Prägen von Flächengebilden**

(30) Priorität: 25.03.2009 DE 102009001826
(71) Anmelder: Trocellen GmbH, 53840 Troisdorf (DE)
(72) Erfinder: Graziottin, Manuel, 31044, Montebelluna (TV) (IT)
(74) Vertreter: Wübken, Ludger

(57) **Zusammenfassung**

Es wird ein Verfahren beschrieben zum Prägen und/oder Umformen von Flächengebilden auf der Basis von vernetztem Polyolefinschaum. Zunächst wird ein flächiger Abschnitt aus vernetztem Polyolefinschaum wenigstens auf einer Seite mit einem Fasermaterial wie Vlies oder Textil oder mit einer Folie zu einem mehrlagigen Flächengebilde kaschiert, wobei das Fasermaterial oder die Folie aus einem im Wesentlichen polaren thermoplastischen Kunststoff besteht. Das kaschierte Flächengebilde wird in einer unbeheizten Form zonenweise verpresst und dabei einer Hochfrequenzstrahlung ausgesetzt, wobei das mehrlagige Flächengebilde bleibend geprägt und/oder umgeformt wird. Anschließend wird das mehrlagige Flächengebilde der Form entnommen.

## Beschreibung

### Beschreibung

### Verfahren zum Prägen und/oder Umformen von Flächengebilden

Die Erfindung betrifft ein Verfahren zum Prägen und/oder Umformen von Flächengebilden auf der Basis von vernetztem Polyolefinschaum.

### Technisches Gebiet

Vernetzte Polyolefinschäume, insbesondere chemisch und physikalisch vernetzte Polyethylenschäume, werden z. B. als dekorative, polsternde und dämmende Materialien eingesetzt. Das Prägen und Umformen von vernetztem Polyolefinschaum ist bekannt, beispielsweise mit Hilfe von Prägewalzen, wobei grundsätzlich das Ausgangsmaterial auf eine Temperatur von 130 bis 190 °C erwärmt werden muss, um die gewünschte bleibende Verformung erreichen zu können. Eine derartige Erwärmung erfordert naturgemäß einen entsprechenden Energieaufwand und erschwert die Handhabung des Materials.

### Stand der Technik

Bei polaren Basismaterialien für Schaumstoffe, wie z. B. PVC, ist es bekannt, diese beim oder vor dem Umformen oder Prägen mittels Mikrowellen oder einer anderen Hochfrequenzquelle zu erwärmen. Die Erwärmung durch Hochfrequenz kann dabei sehr schnell erfolgen. Bei nichtpolaren Ausgangsmaterialien wie Polyethylen ist eine Erwärmung mit Mikrowellen oder Hochfrequenz jedoch nicht möglich, da diese Materialien diese Frequenzen unzureichend absorbieren.

Aus der EP 0 093 871 B1 ist ein Verfahren zur dielektrischen Erwärmung von Polyolefin-Schaumstoffen bekannt, bei dem der Polyolefinschaum durch Zusatz von α, β-ungesättigten Polyestern modifiziert wird. Bei diesen modifizierten Ausgangsmaterialien absorbieren die polaren Zusätze die Hochfrequenzstrahlung, so dass eine Prägung oder Umformung ähnlich der Prägung bzw. Umformung von polaren Kunststoffen wie PVC möglich ist. Allerdings werden für dieses Verfahren spezielle Schäume benötigt, die nicht marktüblich sind.

### Aufgabe

Aufgabe der vorliegenden Erfindung ist es daher, ein Verfahren zum Prägen und/oder Umformen von Flächengebilden zur Verfügung zu stellen, das diese Nachteile nicht aufweist.

### Darstellung der Erfindung

Die Erfindung löst diese Aufgabe durch ein Verfahren zum Prägen und/oder Umformen von Flächengebilden auf der Basis von vernetzten Polyolefinschäumen, bei dem zunächst ausgegangen wird von einem flächigen Abschnitt aus vernetztem Polyolefinschaum, der wenigstens auf einer Seite mit einem Fasermaterial, insbesondere einem Vlies oder Textil, oder einer Folie kaschiert ist, wobei das Fasermaterial oder die Folie aus einem im Wesentlichen polaren thermoplastischem Kunststoff besteht. Dieses kaschierte Flächengebilde wird in eine bevorzugt unbeheizte Form gelegt und entsprechend der gewünschten Prägung bzw. Umformung zonenweise verpreßt und dabei einer Hochfrequenzstrahlung, ausgesetzt. Die Hochfrequenzstrahlung wird nahezu ausschließlich von dem Fasermaterial bzw. der Folie absorbiert, während der eingesetzte vernetzte Polyolefinschaum die eingesetzte Hochfrequenzstrahlung nahezu ungehindert durchtreten lässt. Durch die Erwärmung des aufkaschierten Fasermaterials bzw. der Folie kann das gesamte mehrlagige Flächengebilde bleibend geprägt und/oder umgeformt werden, so dass es anschließend der Form entnommen werden kann.

Die Verwendung eines Fasermaterials, insbesondere eines Textils, ist gegenüber der Verwendung einer Folie bevorzugt. Bei dem textilen Material unterscheidet man sogenannte geblockte Textilien, die eine geringe Elastizität aufweisen, und ungeblockte Materialien, die eine hohe Elastizität aufweisen. Bei dem erfindungsgemäßen Verfahren wird bevorzugt wenigstens auf einer Seite des vernetzten Polyolefinschaums ein geblocktes Textil eingesetzt, besonders bevorzugt auf einer Seite ein geblocktes und auf der anderen Seite ein ungeblocktes Textil. Das nicht geblockte Fasermaterial weist dabei eine wenigstens fünf mal so hohe Elastizität auf wie das geblockte Material, der E-Modul des geblockten Fasermaterials ist also wenigstens fünfmal so hoch wie der E-Modul des nicht geblockten Materials.

Beim Prägen des Flächengebildes wird bevorzugt die Oberfläche, die mit dem nicht geblockten Material kaschiert ist, wesentlich stärker geprägt als die mit dem geblockten Material versehene Seite. Bei Bedarf kann das nicht geblockte Textil nach dem Prägevorgang wieder entfernt werden. Soweit dieses erwünscht ist, wird dieses Textil bevorzugt vor dem Einlegen in die Presse nicht mit dem Polyolefinschaum kaschiert, sondern lose auf die Oberfläche des Fasermaterials aufgelegt.

Bevorzugt enthält der als Basismaterial verwendete vernetzte Polyolefinschaum keine polaren Gruppen. Bevorzugt wird ein Polyethylenschaum verwendet einer Dichte zwischen 25 kg/m³ und 130 kg/m³. Die Dauer und Intensität der Bestrahlung mit der Hochfrequenzstrahlung und die Verweilzeit in der Presse ist naturgemäß abhängig von der Stärke der Hochfrequenz-Quelle und kann durch einfache Versuche ermittelt werden.

Das erfindungsgemäße Verfahren wird bevorzugt zum einseitigen Prägen eingesetzt, d. h. bei einem Prägen, bei dem eine der Oberflächen eine relativ starke Prägung erfährt, während die Rückseite keine oder nur eine geringe Prägetiefe aufweist.

Wesentliche Vorteile des erfindungsgemäßen Verfahrens liegen darin, dass eine im Vergleich zur herkömmlichen beheizten Formpresse eine preisgünstige Presse verwendet werden kann. Darüber hinaus sind die Taktzeiten wesentlich kürzer und der Energieverbrauch geringer als bei herkömmlichen Prägeverfahren.

Die Erfindung wird nachfolgend anhand von Ausführungsbeispielen näher erläutert.

### Beispiel 1

Ein chemisch vernetzter Polyethylenschaum, eine Rollenware einer Dicke von 10 mm und einer Dichte von 50 kg/m² der Marke Trocellen®, wird auf der Unterseite mit einem sogenannten blockierten Polyestergewebe, d. h. einem Textil mit geringer Elastizität, laminiert. Das Polyestergewebe weist ein Flächengewicht von 100g/m² auf. Auf der Oberseite wird ein elastisches, d. h. nicht blockiertes Polyamid-Textil mit einem Flächengewicht von 150 g/m² kaschiert.

Ein ausgestanzter Abschnitt dieses dreilagigen flächigen Laminats wird anschließend - mit der blockierten Polyestergewebe-Seite nach unten - in eine Presse mit 50 kN Schließkraft und integrierter Hochfrequenzstrahlungs-Einrichtung eingelegt. Auf das Laminat wird anschließend eine Form mit der gewünschten Prägekontur aufgelegt und die Form für 30 sec. unter Einwirkung der HF-Strahlung geschlossen. Nach dem Öffnen der Presse ist das geprägte Laminat nahezu kalt, jedoch bleibend auf der Oberseite geprägt, und kann sofort der Presse entnommen werden.

### Beispiel 2

In einem zweiten Ausführungsbeispiel der Erfindung wird - wie im ersten Beispiel - ein chemisch vernetzter Polyethylenschaum, eine Rollenware einer Dicke von 10 mm und einer Dichte von 50 kg/m² der Marke Trocellen®, auf der Unterseite mit einem sogenannten blockierten Polyestergewebe, d. h. einem Textil mit geringer Elastizität, laminiert. Das Polyestergewebe weist ein Flächengewicht von 100g/m² auf. Ein ausgestanzter Abschnitt dieses zweilagigen flächigen Laminats wird anschließend in eine Presse mit 50 kN Schließkraft und integrierter Hochfrequenzstrahlungs-Einrichtung eingelegt. Auf die Oberseite wird ein elastisches, d. h. nicht blockiertes Polyamid-Textil mit einem Flächengewicht von 150 g/m² lose aufgelegt. Auf das nicht geblockte Polyamid-Textil wird anschließend eine Form mit der gewünschten Prägekontur gelegt und die Form für 30 sec. unter Einwirkung der HF-Strahlung geschlossen. Nach dem Öffnen der Presse ist das geprägte Laminat nahezu kalt, jedoch bleibend geprägt, und kann sofort der Presse entnommen werden. Das nicht blockierte Polyamid-Textil auf der geprägten Oberseite kann anschließend leicht von dem Laminat abgezogen werden.

## Patentansprüche

1. Verfahren zum Prägen und/oder Umformen von Flächengebilden auf der Basis von vernetztem Polyolefinschaum, **gekennzeichnet durch** folgende Merkmale:
- ein flächiger Abschnitt aus vernetztem Polyolefinschaum wird wenigstens auf einer Seite mit einem Fasermaterial wie Vlies oder Textil oder mit einer Folie zu einem mehrlagigen Flächengebilde kaschiert,
- wobei das Fasermaterial oder die Folie aus einem im Wesentlichen polaren thermoplastischen Kunststoff besteht;
- das kaschierte Flächengebilde wird in einer unbeheizten Form zonenweise verpresst und dabei einer Hochfrequenzstrahlung ausgesetzt, wobei das mehrlagige Flächengebilde bleibend geprägt und/oder umgeformt wird,
- das mehrlagige Flächengebilde wird der Form entnommen.

2. Verfahren nach Anspruch 1, **dadurch gekennzeichnet, dass** der vernetzte Polyolefinschaum keine polare Gruppen enthaltenden Zusätze aufweist.

3. Verfahren nach Anspruch 1 oder 2, **dadurch gekennzeichnet, dass** das Flächengebilde aus vernetztem Polyolefinschaum auf einer Seite mit einem ersten und auf der zweiten Seite mit einem zweiten insbesondere Fasermaterial kaschiert ist.

4. Verfahren nach einem der Ansprüche 1 oder 2, **dadurch gekennzeichnet, dass** das Flächengebilde aus vernetztem Polyolefinschaum auf einer Seite mit einem ersten Fasermaterial bzw. Textil kaschiert und auf der zweiten Seite ein zweites Fasermaterial aufgelegt wird, wobei das zweite Fasermaterial nach dem Prägen bzw. Umformen wieder entfernt wird.

5. Verfahren nach einem der Ansprüche 3 oder 4, **dadurch gekennzeichnet, dass** das eines der beiden Fasermaterialien ein so genanntes blockiertes Fasermaterial mit begrenzter Elastizität und das zweite Fasermaterial ein so genanntes nicht-blockiertes Fasermaterial mit höherer Elastizität ist, wobei das blockierte Fasermaterial einen E-Modul aufweist, der wenigstens fünfmal so hoch ist wie der E-Modul des nicht blockierten Fasermaterials.
